(19) **Europäisches Patentamt**
**European Patent Office**
**Office européen des brevets**

(11) **EP 2 112 171 B1**

(12) **EUROPEAN PATENT SPECIFICATION**

(45) Date of publication and mention
of the grant of the patent:
**09.11.2011 Bulletin 2011/45**

(51) Int Cl.:
**C08F 2/20** (2006.01)   **C08G 67/02** (2006.01)

(21) Application number: **08704440.0**

(86) International application number:
**PCT/JP2008/051813**

(22) Date of filing: **05.02.2008**

(87) International publication number:
**WO 2008/096727 (14.08.2008 Gazette 2008/33)**

(54) **DISPERSION STABILIZER FOR SUSPENSION POLYMERIZATION OF VINYL COMPOUND, AND METHOD FOR PRODUCTION OF VINYL COMPOUND POLYMER**

DISPERSIONSSTABILISATOR FÜR DIE SUSPENSIONSPOLYMERISATION EINER VINYLVERBINDUNG UND VERFAHREN ZUR HERSTELLUNG EINES VINYLVERBINDUNGSPOLYMERS

STABILISANT DE DISPERSION POUR POLYMÉRISATION EN SUSPENSION D'UN COMPOSÉ VINYLIQUE ET PROCÉDÉ DE FABRICATION D'UN POLYMÈRE DE COMPOSÉ VINYLIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **07.02.2007 JP 2007027593**

(43) Date of publication of application:
**28.10.2009 Bulletin 2009/44**

(73) Proprietor: **Kuraray Co., Ltd.**
**Okayama 710-0801 (JP)**

(72) Inventors:
• **NII, Shinsuke**
**Kurashiki-shi**
**Okayama 713-8550 (JP)**
• **KATO, Masaki**
**Kurashiki-shi**
**Okayama 713-8550 (JP)**

(74) Representative: **Hart-Davis, Jason et al**
**Cabinet Beau de Loménie**
**158, rue de l'Université**
**75340 Paris Cedex 07 (FR)**

(56) References cited:
**GB-A- 1 403 773      JP-A- 8 208 724**
**JP-A- 8 269 112      JP-A- 08 208 724**
**JP-A- 08 253 509     JP-A- 11 158 204**
**JP-A- 61 108 602     US-A- 4 137 382**
**US-A- 4 172 939**

• **MITSUTANI A. AND YANO M.: 'Sakusan Vinyl to Issanka Tanso tono Kyojugo Oyobi Kyojugotai kara Erareta Hensei Polyvinyl Alcohol' KOGYOKAGAKU ZASSHI vol. 67, no. 6, 05 June 1964, pages 935 - 93**

**Description**

**Technical Field**

The present invention relates to a dispersion stabilizer for suspension polymerization of a vinyl compound, and more specifically, to a dispersion stabilizer to be added to a polymerization system in producing a vinyl compound polymer by suspension polymerization of a vinyl compound. The present invention also relates to a method of producing a vinyl compound polymer using the dispersion stabilizer.

**Background Art**

As a method of producing industrially vinyl compound polymers (hereinafter also referred to simply as "vinyl polymers") such as a vinyl chloride resin, suspension polymerization of vinyl compounds such as a vinyl chloride monomer is employed widely. In this suspension polymerization, a vinyl compound is dispersed in an aqueous medium and polymerization thereof is carried out using an oil-soluble catalyst. Thereby, a particulate vinyl polymer is obtained. For the purpose of improving the quality of the polymer to be obtained, a dispersion stabilizer is added to the medium. The factors governing the quality of a vinyl polymer obtained by suspension polymerization of a vinyl compound include, for example, the polymerization conversion, the water-compound ratio (water-monomer ratio), the polymerization temperature, the type and amount of an oil-soluble catalyst, the type of a polymerization vessel, the rate of stirring the contents of the polymerization vessel, and the type of a dispersion stabilizer. Among these factors, the type of a dispersion stabilizer has a significant effect on the quality of the vinyl polymer to be obtained.

A dispersion stabilizer used for suspension polymerization of a vinyl compound is required to have the properties capable of achieving the following objectives: (1) to reduce the formation of coarse particles and to allow the obtained vinyl polymer to have a sharp particle size distribution; and (2) to reduce the amount of scale deposited on a polymerization vessel during polymerization. Conventionally, as a dispersion stabilizer, cellulose derivatives such as methylcellulose and carboxymethylcellulose, and partially saponified polyvinyl alcohol have been used either alone or in combination. It is difficult, however, to achieve the above-mentioned objectives (1) and (2) by using these conventional dispersion stabilizers.

"POVAL", Kobunshi Kankokai, pp. 369-373 and 411-415, issued in 1984, discloses, as dispersion stabilizers used for suspension polymerization of vinyl chloride, a polyvinyl alcohol (PVA) having a polymerization degree of 2000 and a saponification degree of 80 mol% and a PVA having a polymerization degree of 700 to 800 and a saponification degree of 70 mol%. These dispersion stabilizers, however, cannot achieve the above-mentioned objectives (1) and (2) satisfactorily.

JP 05(1993)-88251 B discloses a dispersion stabilizer made of a PVA. This PVA has an average degree of polymerization of at least 500 and a ratio between a weight-average degree of polymerization Pw and a number-average degree of polymerization Pn, Pw/Pn, of 3.0 or less. This PVA has a structure of $[-CO-(CH=CH-)_2]$ containing a carbonyl group and a vinylene group adjacent thereto. A 0.1% aqueous solution of this PVA has absorbances of at least 0.3 and at least 0.15 at wavelengths of 280 nm and 320 nm, respectively. Furthermore, a ratio of the absorbance (b) at a wavelength of 320 nm to the absorbance (a) at a wavelength of 280 nm, (b)/(a), is at least 0.30.

JP 05(1993)-105702 A discloses a dispersion stabilizer made of a PVA. This PVA has a saponification degree of 75 to 85 mol%. A 0.1-wt.% aqueous solution of this PVA has an absorbance of at least 0.1 at a wavelength of 280 nm. Furthermore, this PVA contains 0.01 to 0.15 mol% of carboxyl groups, and the 0.1-wt.% aqueous solution of this PVA has a clouding point of at least 50°C.

Moreover, JP 08(1996)-208724 A discloses a dispersant used for suspension polymerization. This dispersant is made of a PVA having a structure of $[-CO-(CH=CH-)_2]$ in the molecule. A 1-wt.% aqueous solution of this PVA has an absorbance of at least 2.5 at a wavelength of 280 nm. This PVA has an average degree of polymerization of at least 500, a saponification degree of 60 to 90 mol%, a ratio of a weight-average molecular weight Mw to a number-average molecular weight Mn, Mw/Mn, of 2.5 or less, a block character with respect to the saponification degree of 0.45 or lower, and a methanol-soluble portion of 10 wt.% or less.

These dispersion stabilizers disclosed in JP 05(1993)-88251 B, JP 05(1993)-105702 A, and JP 08(1996)-208724 A, however, cannot achieve satisfactorily the above-mentioned objectives (1) and (2).

**Disclosure of the Invention**

It is an object of the present invention to provide a PVA-based dispersion stabilizer that is used for suspension polymerization of a vinyl compound and, when it is used, reduces the formation of coarse particles and allows the obtained vinyl polymer to have a sharp particle size distribution, and reduces the amount of scale deposited on a polymerization vessel more than ever before.

As a result of keen studies made assiduously, the present inventors have found the following facts that: in the case where the above structure of [-CO-(CH=CH-)$_2$], which is considered to have a significant effect on suspension polymerization of a vinyl compound, is present at only one of the ends of the main chain of PVA (see paragraph [0010] of JP 08(1996)-208724 A), the above-mentioned objectives (1) and (2) cannot be achieved even if the dispersion stabilizers disclosed in the publications are used; and a carbon monoxide-vinyl alcohol copolymer having a specific structure exhibits excellent properties as a dispersion stabilizer. Thus, the present inventors have completed the present invention.

A dispersion stabilizer for suspension polymerization of a vinyl compound of the present invention (hereinafter also referred to simply as a "dispersion stabilizer") is composed of a carbon monoxide-vinyl alcohol copolymer containing a constitutional unit derived from carbon monoxide (a CO unit) and a vinyl alcohol unit, and this copolymer has a content of the CO unit of 0.01 to 8 mol%, a viscosity-average degree of polymerization of 200 to 3500, and a saponification degree of 60 to 90 mol%.

A method of producing a vinyl compound polymer of the present invention is a method including carrying out suspension polymerization of a vinyl compound using a dispersion stabilizer. This dispersion stabilizer is a carbon monoxide-vinyl alcohol copolymer containing a constitutional unit derived from carbon monoxide (a CO unit) and a vinyl alcohol unit, and having a content of the CO unit of 0.01 to 8 mol%, a viscosity-average degree of polymerization of 200 to 3500, and a saponification degree of 60 to 90 mol%.

The dispersion stabilizer of the present invention is composed of a carbon monoxide-vinyl alcohol copolymer (CO-modified PVA) containing CO units and vinyl alcohol units. The CO units are present at random in the main chain of the CO-modified PVA, and a portion of the CO units and the groups adjacent thereto form a structure of [-CO-CH=CH-], (which is called an enone structure in the present description). In the CO-modified PVA constituting the dispersion stabilizer of the present invention, the content of the CO units (the amount of modification with CO) is at least 0.01 mol%. In the main chain of such a PVA, an enone structure is present at an arbitrary position other than the ends of the main chain (the end of the main chain may be or may not be an enone structure). Furthermore, in the dispersion stabilizer of the present invention, the upper limit of the amount of modification with CO, the viscosity-average degree of polymerization P$\eta$, and the saponification degree of the CO-modified PVA are 8 mol%, 200 to 2500, and 60 to 90 mol%, respectively. In other words, the dispersion stabilizer of the present invention is composed of a CO-modified PVA having an enone structure at an arbitrary position in its main chain and having factors, such as a polymerization degree, in specific ranges of values. The use of this dispersion stabilizer in the suspension polymerization of a vinyl compound makes it possible to obtain excellent effects of reducing the formation of coarse particles, allowing the obtained vinyl polymer to have a sharp particle size distribution, and reducing the amount of scale deposited on a polymerization vessel more than ever before. The dispersion stabilizer of the present invention can achieve these effects, and therefore has an extremely high industrial value.

## Best Mode for Carrying Out the Invention

[Dispersion Stabilizer]

In the CO-modified PVA constituting the dispersion stabilizer of the present invention, the amount of modification with CO is 0.01 to 8 mol%, preferably 0.1 to 5 mol%, and more preferably 0.2 to 3 mol%. It is particularly preferable that the lower limit thereof is at least 0.5 mol%. When the amount of modification with CO is less than 0.01 mol%, the properties obtained by the modification with CO are not exhibited. Accordingly, many coarse particles are formed in the suspension polymerization of a vinyl compound, and the obtained vinyl polymer has a broad particle size distribution, and a large amount of scale is deposited on a polymerization vessel. When the amount of modification with CO exceeds 8 mol%, the CO-modified PVA has a lower water solubility and thereby has inferior handling properties as a dispersion stabilizer. In this case, sufficient effects of reducing the formation of coarse particles and the amount of scale deposited on the polymerization vessel cannot be obtained. The CO-modified PVA constituting the dispersion stabilizer of the present invention contains a larger amount of carbonyl groups than the conventional carbonyl group-containing PVAs described in the background art.

The amount of modification with CO in the CO-modified PVA can be obtained by proton NMR analysis of a carbon monoxide-vinyl ester copolymer that is a precursor of the PVA. Specifically, the amount of modification with CO may be obtained in the following manner. The carbon monoxide-vinyl ester copolymer is purified by reprecipitation sufficiently at least three times in an n-hexane-acetone mixed solution, and then dried at 50°C under reduced pressure for two days. Thus, a copolymer is obtained for analysis. Next, the copolymer thus obtained is dissolved in CDCl$_3$, and the proton NMR of the copolymer is measured at room temperature (in Examples, the Proton NMR was measured using a JEOL GX-500 spectrometer). Based on the obtained NMR spectrum, a peak a (at a chemical shift of 4.7 to 5.2 ppm) corresponding to methine (CH) of the main chain of vinyl ester and a peak B (at a chemical shift of 2.2 to 3.0 ppm) corresponding to methylene (CH$_2$) adjacent to a carbonyl group are identified. Thereby, the amount of modification with CO can be evaluated according to the following formula (II). It should be noted that carbon monoxide-vinyl ester copolymers have commonly what is called a "head-to-tail structure", in which methylene is present adjacent to the CO unit basically. Only methine is present adjacent to the CO unit in exceptional cases, but the probability of such exceptional cases is negligible in evaluating the amount of modification with CO.

$$\text{Amount of modification with CO (mol\%)}$$
$$= \{(\text{number of protons corresponding to the peak } \beta / 2) /$$
$$(\text{number of protons corresponding to the peak } \alpha + \text{number of protons}$$
$$\text{corresponding to the peak } \beta / 2)\} \times 100(\%) \qquad \ldots\ldots \text{(II)}$$

The CO-modified PVA constituting the dispersion stabilizer of the present invention has a viscosity-average degree of polymerization $P\eta$ of 200 to 3500, and preferably 500 to 3000. When the viscosity-average degree of polymerization $P\eta$ is less than 200, the stability in the suspension polymerization of a vinyl compound is lowered. When the polymerization degree $P\eta$ exceeds 3500, the obtained polymer particles may have a broad particle size distribution in some cases. Furthermore, when the polymerization degree $P\eta$ is out of the range of 200 to 3500, sufficient effects of reducing the formation of coarse particles and the amount of scale deposited on the polymerization vessel cannot be obtained during the suspension polymerization of the vinyl compound.

The viscosity-average degree of polymerization $P\eta$ of the CO-modified PVA is measured according to JIS-K6726. Specifically, the CO-modified PVA is re-saponified and purified, and then, the intrinsic viscosity $[\eta]$ is measured in water at 30°C. Thereby, the polymerization degree $P\eta$ of the CO-modified PVA can be evaluated by the following formula (III):

$$P = ([\eta] \times 10^3 / 8.29)^{(1/0.62)} \qquad \ldots\ldots \text{(III)}$$

The CO-modified PVA constituting the dispersion stabilizer of the present invention has a sapofinication degree of 60 to 90 mol%, preferably 65 to 88 mol%, and more preferably 68 to 85 mol%. When the saponification degree is less than 60 mol%, the CO-modified PVA has a lower water solubility and thereby has inferior handling properties as a dispersion stabilizer. The saponification degree exceeding 90 mol% may decrease the plasticizer absorptivity of the obtained vinyl polymer. Furthermore, when the saponification degree is out of the range of 60 to 90 mol%, sufficient effects of reducing the formation of coarse particles and the amount of scale deposited on the polymerization vessel cannot be obtained during the suspension polymerization of the vinyl compound.

In the present description, the saponification degree of the CO-modified PVA is defined as a value measured by a method for measuring a saponification degree specified in JIS-K6726. When the method specified in JIS-K6726 is applied to the CO-modified PVA, the total content of the constitutional units containing an enone structure and the vinyl alcohol units is obtained. In the present description, the value of this total content is referred to as a "saponification degree".

It is preferable that in the CO-modified PVA constituting the dispersion stabilizer of the present invention, the viscosity-average degree of polymerization $P\eta$ and the content of the CO units (amount of modification with CO) Y (mol%) satisfy the relationship represented by the following formula (I):

$$2 \leq 0.01 \times P\eta \times Y \leq 50 \qquad \ldots\ldots \text{(I)}$$

When a value obtained by multiplying the product of the polymerization degree ($P\eta$) and the amount of modification with CO (Y) by 0.01 is at least 2 but not more than 50, the amount of scale deposited on the polymerization vessel during the suspension polymerization of the vinyl compound is further reduced.

The CO-modified PVA constituting the dispersion stabilizer of the present invention may contain constitutional units other than the CO unit, vinyl alcohol unit, and vinyl ester unit that is the precursor of the vinyl alcohol unit, as long as the advantageous effects of the present invention are attained. One example of such a constitutional unit is a unit derived from a monomer (A) to be described later.

The dispersion stabilizer of the present invention may contain materials other than the above CO-modified PVA as long as the advantageous effects of the present invention are attained.

The method of producing the dispersion stabilizer of the present invention is not particularly limited. For example, the dispersion stabilizer can be produced by a production method of a dispersion stabilizer as described below.

[Production Method of Dispersion Stabilizer]

The dispersion stabilizer of the present invention can be produced, for example, by saponifying a carbon monoxide-vinyl ester copolymer (CO-modified PVEs) containing vinyl ester units and CO units. The saponification converts the vinyl ester units into vinyl alcohol units, and thereby the CO-modified PVEs is converted into a CO-modified PVA. Furthermore, during the saponification, a structure adjacent to the CO unit in the CO-modified PVEs is converted through decarboxylation reaction and/or dehydration reaction into an enone structure. In the case where the above copolymer includes vinyl acetate units as the vinyl ester units, it is subjected to deacetylation reaction as the decarboxylation reaction.

Part of the enone structures formed by the saponification may further be converted into diene structures or triene structures in some cases because the vinyl alcohol units adjacent to the enone structures are further dehydrated during the drying process carried out subsequently to the saponification.

The saponification of the CO-modified PVEs can be carried out by well-known methods based on an alcoholysis reaction or a hydrolysis reaction using a basic catalyst such as sodium hydroxide, potassium hydroxide, and sodium methoxide, or an acid catalyst such as p-toluenesulfonic acid. Examples of a solvent to be used for these reactions include: alcohols such as methanol and ethanol; esters such as methyl acetate and ethyl acetate; ketones such as acetone and methyl ethyl ketone; and aromatic hydrocarbons such as benzene and toluene. These solvents can be used alone or in combination of two or more types thereof. Particularly, it is relatively easy and preferable to saponify the CO-modified PVEs using methanol or a methanol/methyl acetate mixed solution as a solvent and sodium hydroxide as a catalyst.

The method of forming the CO-modified PVEs is not particularly limited. It is preferable to use a method for copolymerizing carbon monoxide and a vinyl ester monomer in an atmosphere containing carbon monoxide in the absence of a solvent, or in an atmosphere containing carbon monoxide in an alcohol-based solvent. In this method, the CO units can be introduced efficiently into the main chain of PVEs.

It is preferable that the copolymerization is carried out under a partial pressure of CO of 0.01 to 8 MPa. In this case, it is relatively easy to form a CO-modified PVEs with the amount of modification with CO in the range of 0.01 to 8 mol%. When the partial pressure of CO is excessively low during the copolymerization, a CO-modified PVEs with a sufficient amount of modification with CO cannot be formed. When the partial pressure of CO is excessively high, the amount of modification with CO in the obtained CO-modified PVEs becomes excessively large.

It is preferable that the copolymerization is carried out in a CO atmosphere. In this case, the CO units are introduced efficiently into the main chain of the PVEs.

The temperature for carrying out the copolymerization is preferably 0 to 200°C, and more preferably 30 to 140°C. When the temperature is lower than 0°C, a sufficient polymerization rate cannot be obtained in some cases. When the temperature is higher than 200°C, the amount of CO dissolved in the solvent is decreased and thus a CO-modified PVEs with a desired amount of modification with CO cannot be obtained in some cases.

The method for controlling the temperature of the copolymerization is not particularly limited. For example, there are methods such as a method for controlling the polymerization rate so as to balance the heat generated by the polymerization and the heat released from the surface of the polymerization vessel, and a method for controlling the temperature of the copolymerization by an outer jacket employing an appropriate heat medium. From a viewpoint of safety, the latter method is preferred.

The method of copolymerization is not particularly limited as long as the copolymerization can be carried out in the absence of a solvent or in an alcohol-based solvent. For example, polymerization methods, such as block polymerization, solution polymerization, suspension polymerization, and emulsion polymerization, can be used as required. In particular, block polymerization in the absence of a solvent and solution polymerization in an alcohol-based solvent can be used suitably. It is recommended to use emulsion polymerization in order to obtain a CO-modified PVEs having a high polymerization degree.

The type of copolymerization is not particularly limited. For example, any of batch polymerization, semi-batch polymerization, continuous polymerization, and semi-continuous polymerization may be selected.

The alcohol-based solvent is not particularly limited. For example, alcohols such as methyl alcohol, ethyl alcohol, and propyl alcohol may be used alone or in combination of two or more of them.

As a polymerization initiator used for the copolymerization, for example, a well-known initiator, such as an azo initiator, a peroxide initiator, or a redox initiator, may be selected suitably depending on the polymerization method. Examples of azo initiators include 2,2'-azobisisobutyronitrile, 2,2'-azobis(2,4-dimethylvaleronitrile), and 2,2'-azobis(4-methoxy-2,4-dimethylvaleronitrile). Examples of peroxide initiators include: percarbonate compounds such as diisopropyl peroxydicarbonate, di-2-ethylhexyl peroxydicarbonate, and diethoxyethyl peroxydicarbonate; perester compounds such as t-butyl peroxyneodecanate, α-cumyl peroxyneodecanate, and t-butyl peroxydecanate; acetylcyclohexylsulfonyl peroxide; and 2,4,4-trimethylpentyl-2-peroxyphenoxyacetate. A combination of any of the above-mentioned initiators with, for example, potassium persulfate, ammonium persulfate, or hydrogen peroxide also can be used as an initiator. Examples of redox initiators include combinations of the above-mentioned peroxides with a reducing agent such as sodium hydrogensulfite, sodium hydrogencarbonate, tartaric acid, L-ascorbic acid, Rongalit. When the copolymerization of CO and a vinyl ester monomer is carried out at a high temperature, coloring of PVEs caused by the decomposition of the vinyl ester monomer may be observed in some cases. In such a case, an antioxidant such as tartaric acid in an amount of 1 to 100 ppm (with respect to the total amount of the vinyl ester monomer) can be added to the polymerization system in order to prevent the coloring.

The vinyl ester monomer to be copolymerized with CO is not particularly limited. Examples of the vinyl ester monomer include vinyl formate, vinyl acetate, vinyl propionate, vinyl butyrate, vinyl isobutyrate, vinyl pivalate, vinyl versatate, vinyl caproate, vinyl caprylate, vinyl laurylate, vinyl palmitate, vinyl stearate, vinyl oleate, and vinyl benzoate. Among them, vinyl acetate is preferable.

In the copolymerization of CO and the vinyl ester monomer, another monomer (A) may be copolymerized without departing from the scope of the present invention. Examples of the monomer (A) include: $\alpha$-olefins such as ethylene, propylene, n-butene, and isobutylene; acrylic acid and salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide; acrylamide derivatives such as N-methylacrylamide, N-ethylacrylamide, N,N-dimethylacrylamide, diacetonacrylamide, acrylamide propanesulfonic acid and salts thereof, acrylamide propyl dimethylamine and salts or quaternary salts thereof, and N-methylolacrylamide and derivatives thereof; methacrylamide; methacrylamide derivatives such as N-methylmethacrylamide, N-ethylmethacrylamide, methacrylamide propanesulfonic acid and salts thereof, methacrylamide propyl dimethylamine and salts or quaternary salts thereof, and N-methylolmethacrylamide and derivatives thereof; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; unsaturated dicarboxylic acids such as maleic acid, itaconic acid, and fumaric acid, and salts or esters thereof; vinylsilyl compounds such as vinyltrimethoxysilane; and isopropenyl acetate.

The copolymerization of CO and the vinyl ester monomer may be carried out in the presence of a chain transfer agent for the purposes of, for example, adjusting the polymerization degree of the resulting copolymer, without departing from the scope of the present invention. Examples of the chain transfer agent include: aldehydes such as acetaldehyde and propionaldehyde; ketones such as acetone and methyl ethyl ketone; mercaptans such as 2-hydroxy ethanethiol; and hydrocarbon halides such as trichloroethylene and perchloroethylene. Among these, aldehydes and ketones can be used suitably. The amount of the chain transfer agent to be added may be determined according to the chain transfer constant of the chain transfer agent to be added and the target polymerization degree of the CO-modified PVEs. Generally, the amount of the chain transfer agent to be added is desirably about 0.1 to 10 wt.% with respect to the total amount of the vinyl ester monomer.

[Production Method of Vinyl Compound Polymer]

In the production method of the vinyl compound polymer of the present invention (the production method of the present invention), suspension polymerization of a vinyl compound is carried out using the above-mentioned dispersion stabilizer of the present invention. This production method makes it possible to suppress the formation of coarse particles and the deposition of scale on the polymerization vessel, and to sharpen the particle size distribution of the obtained vinyl polymer.

Specific steps in the production method of the present invention may be performed in the same manner as specific steps in the known production methods, except that the dispersion stabilizer of the present invention is used as a dispersion stabilizer.

The suspension polymerization is carried out in an aqueous medium. The temperature of the aqueous medium is not particularly limited. As the aqueous medium, not only cold water of about 20°C but also hot water of 90°C or higher can be used suitably. This aqueous medium may be water. It may be a water solution containing various additives, or an aqueous solution containing an organic solvent. The amount of the aqueous medium to be added to the polymerization system is not restricted as long as it allows the polymerization system to be heated sufficiently. In order to increase the heat removal efficiency, a polymerization vessel equipped with a reflux condenser may be used. A method can be employed suitably in which hot water is used as an aqueous medium and a previously heated vinyl compound is charged into a polymerization vessel.

The amount of the dispersion stabilizer of the present invention to be used for the suspension polymerization (the amount of the dispersion stabilizer to be added to the polymerization system) is not particularly limited. Generally, it is preferably 0.01 to 5 parts by weight with respect to 100 parts by weight of the vinyl compound, more preferably 0.02 to 2 parts by weight, further preferably 0.02 to 1 parts by weight, and particularly preferably 0.02 to 0.1 parts by weight. As shown in Examples to be described later, the amount of the dispersion stabilizer may be less than 0.1 parts by weight with respect to 100 parts by weight of the vinyl compound. This amount is extremely smaller than the amounts of conventional dispersion stabilizers to be used.

The dispersion stabilizer of the present invention may be used alone, or together with a water-soluble emulsifying agent that is usually used for suspension polymerization of a vinyl compound. Examples of such a water-soluble emulsifying agent include: water-soluble cellulose esters such as methylcellulose, hydroxyethylcellulose, hydroxypropylcellulose and hydroxypropyl methylcellulose; water-soluble polymers such as polyvinyl alcohol and gelatin; oil-soluble emulsifying agents such as sorbitan monolaurate, sorbitan trioleate, glycerol tristearate, and ethylene oxide-propylene oxide block copolymers; polyoxyethylenesorbitan monolaurate; polyoxyethyleneglycerin oleate; and sodium laurate. The amount of the water-soluble emulsifying agent to be added to the polymerization system is not particularly limited. It is preferably 0.01 to 1.0 parts by weight with respect to 100 parts by weight of the vinyl compound.

In the production method of the present invention, other various additives may be added to the polymerization system as required. Examples of the additives include: polymerization regulators such as aldehydes, halogenated hydrocarbons and mercaptans; and polymerization inhibitors such as phenolic compounds, sulfur compounds and N-oxide compounds. Furthermore, pH adjusting agents, scale inhibiting agents, and cross-linking agents also can be added. A plurality of these additives may be used together.

In the production method of the present invention, a polymerization initiator can be selected from those conventionally used for suspension polymerization of a vinyl compound.

In the production method of the present invention, the conditions for the suspension polymerization of the vinyl compound, for example, the order of charging components such as a vinyl compound, a polymerization initiator, a dispersion stabilizer, an aqueous medium and other additives, the proportions of these components to be charged, and the polymerization temperature, can be determined according to the conditions used conventionally for the suspension polymerization of vinyl compounds such as vinyl chloride.

Examples of the vinyl compounds that can be subjected to suspension polymerization using the dispersion stabilizer of the present invention include vinyl chloride alone, and a mixture of vinyl chloride and a monomer that can be copolymerized with vinyl chloride (in which the content of vinyl chloride is at least 50 wt.%). Examples of the monomer that can be copolymerized with vinyl chloride include: vinyl esters such as vinyl acetate, and vinyl propionate; (meth) acrylic acid esters such as methyl (meth)acrylate, and ethyl (meth)acrylate; $\alpha$-olefins such as ethylene and propylene; unsaturated dicarboxylic acids such as maleic anhydride and itaconic acid; acrylonitrile; styrene; vinylidene chloride; and vinyl ether.

The dispersion stabilizer of the present invention can be used in either case where the above-mentioned vinyl compounds other than vinyl chloride are subjected to suspension polymerization individually or where two or more of them are subjected to suspension polymerization.

EXAMPLES

Hereinafter, the present invention is described in more detail with reference to Examples and Comparative Examples. The present invention is not limited to the following Examples by no means. In the following Examples, "parts" and "%" denote "parts by weight" and "% by weight", respectively, unless otherwise specified.

In Examples, CO-modified PVAs obtained in the following Production Examples (including an unmodified PVA of Production Example 17) were used as dispersion stabilizers to carry out the suspension polymerization of vinyl chloride monomers. The particle size distribution of the particles of each vinyl chloride polymer (vinyl chloride particles) formed by the polymerization as well as the amount of scale deposited on the polymerization vessel during the suspension polymerization were evaluated.

(1) Evaluation of Particle Size Distribution of Vinyl Chloride Particles

The vinyl chloride particles formed by the suspension polymerization were classified into the following groups with JIS standard sieves: particles not passing through a 60-mesh sieve (60 mesh on); particles passing through a 60-mesh sieve but not through a 100 mesh sieve (60 mesh pass, 100 mesh on); particles passing through a 100-mesh sieve but not through a 150 mesh sieve (100 mesh pass, 150 mesh on); particles passing through a 150-mesh sieve but not through a 200 mesh sieve (150 mesh pass, 200 mesh on); and particles passing through a 200-mesh sieve. Then, the ratio (wt.%) of particles of each group with respect to all the classified particles was measured. Particles that do not pass through a 60-mesh sieve are coarse particles.

(2) Evaluation of Amount of Scale Deposition

After the suspension polymerization, scale deposited inside the reflux condenser was collected and the weight thereof was measured. The ratio of the weight (wt.%) of the scale with respect to the total weight of the vinyl chloride monomer subjected to the suspension polymerization was calculated, and the amount of scale deposition was evaluated according to the following criteria:

A: Less than 0.1 wt.% with respect to the total weight of the vinyl chloride monomer;
B: At least 0.1 wt.% to less than 0.5 wt.% with respect to the total weight of the vinyl chloride monomer;
C: At least 0.5 wt.% to less than 1.0 wt.% with respect to the total weight of the vinyl chloride monomer; and
D: 0.1 wt.% or more with respect to the total weight of the vinyl chloride monomer.

[Production of CO-modified PVA]

(Production Example 1: Production of PVA1)

275 g of vinyl acetate monomer, 225 g of methanol, and 10 mg of tartaric acid were charged into a pressure reaction vessel having an internal volume of 1 liter and equipped with a stirrer, a nitrogen inlet, a CO inlet, and a polymerization initiator inlet, and the temperature of the contents was raised to 60°C. Then, the reaction atmosphere was replaced with nitrogen by nitrogen bubbling for 30 minutes. Next, the reaction atmosphere was replaced with CO by CO bubbling for 30 minutes, and then, CO was introduced to elevate the pressure in the reaction vessel to 1.0 MPa. Subsequently, as a polymerization initiator, 0.25 g of 2,2'-azobisisobutyronitrile (AIBN) was injected into the vessel so that copolymerization of the vinyl acetate monomer with CO was started. During the polymerization, the pressure in the reaction vessel was maintained at 1.0 MPa by the pressure application to CO, and the polymerization temperature also was maintained at 60°C. Two hours after the start of the polymerization, when the polymerization conversion reached 35%, 30 mg of sorbic acid was added to the reaction system so that the system was cooled to stop the polymerization. An exhaust gas line provided in the reaction vessel was opened to release CO through it, and a nitrogen gas was bubbled to completely release CO in the reaction system. Next, the unreacted vinyl acetate monomer remaining in the reaction system was removed from the reaction vessel under reduced pressure. Thus, a methanol solution of a CO-modified polyvinyl acetate (CO-modified PVAc) was obtained.

Next, methanol was added to the obtained solution to adjust the concentration of the solution, and 7.26 g of an alkaline solution (methanol solution of sodium hydroxide with a concentration of 5%) was added to 192.74 g of the adjusted solution (containing 40g of CO-modified PVAc) so as to saponify the CO-modified PVAc. It should be noted that the concentration of the CO-modified PVAc in the saponification solution was 20%, and the molar ratio of sodium hydroxide to the vinyl acetate units in the CO-modified PVAc was 0.0195.

The saponification solution was left for one hour after the addition of the alkaline solution to proceed the saponification. Then, 200 g of methyl acetate was added to neutralize the remaining alkali. After confirming the completion of neutralization using a phenolphthalein indicator, a white solid was obtained by filtration of the reaction solution, and the obtained solid was put into 1000 g of methanol, and washed while being left at 50°C for one hour. Next, the filtration of the resulting solution and the washing of the white solid obtained by the filtration by putting the solid into methanol were repeated three times, and then, the obtained product was centrifuged and the resulting white solid was left in a drier at 65°C for one day and dried. Thus, a CO-modified PVA (PVA1) was obtained. The viscosity-average degree of polymerization $P\eta$, the saponification degree, and the amount of modification with CO of the obtained PVA1 were evaluated by the method as described above (the following Production Examples also were evaluated in the same manner as above). As a result of the evaluation, the polymerization degree was 860, the saponification degree was 70.2 mol%, and the amount of modification with CO was 0.9 mol%.

(Production Examples 2 to 17: Production of PVA2 to PVA17)

Various types of CO-modified PVAs (PVA2 to PVA16) and an unmodified PVA (PVA17) were produced in the same manner as in Production Example 1, except for the following points that were changed suitably as shown in Table 1 below: the charging amounts of vinyl acetate monomer and methanol; the polymerization conditions (such as a pressure of CO during polymerization); and the saponification conditions (such as a concentration of CO-modified PVAc during saponification, and a molar ratio of sodium hydroxide with respect to vinyl acetate units). Table 1 shows the evaluation results of the polymerization degree, the saponification degree, and the amount of modification with CO of each PVA thus produced.

(Production Example 18: Production of PVA18)

A PVA having a carbonyl group in the molecule was produced according to Example 1 of JP 05(1993)-88251 B. 1200 g of vinyl acetate monomer, 745 g of methanol, and 28 g of acetaldehyde were charged into a 5-liter separable flask, and then the atmosphere was replaced with nitrogen sufficiently. Then, the external temperature of the flask was increased to 65°C, and at a point in time when the internal temperature of the flask reached 60°C, 10 g of methanol containing 0.25 g of 2,2'-azobisisobutyronitrile (AIBN) was added as a polymerization initiator. Next, when the polymerization conversion reached 30%, 30 mg of sorbic acid was added so that the flask was cooled to stop the polymerization. Next, the unreacted vinyl acetate monomer and acetaldehyde were removed from the flask under reduced pressure. Thus, a methanol solution of polyvinyl acetate was obtained. Next, a portion of the solution was taken out, and the concentration thereof was adjusted to 50%. Then, the solution was charged into a kneader, and an alkaline solution (methanol solution of sodium hydroxide with a concentration of 2%) was added to the solution while maintaining the temperature of the solution at 35°C, and the mixture was kneaded at 35°C. Thus, the PVA containing a carbonyl group was obtained. Next, the obtained PVA was subjected to heat treatment at 165°C for 2.5 hours, and thereby a PVA (PVA18) modified with an enone at the end of its main chain and having a viscosity-average degree of polymerization $P\eta$ of 800 and a saponification degree of 72.0 mol% was obtained. As a result of evaluating the amount of modification with CO in the PVA18, (which is considered to correspond to the content of carbonyl groups of the PVA18), it was 0 mol%. It is considered that this is because the PVA18 contains a carbonyl group at only one of the ends of its main chain and therefore has an extremely low content thereof. Table 1 also shows the evaluation results of the polymerization degree and the saponification degree of the PVA18 as well as the amount of modification with CO thereof.
Table 1

| Production Example No. | PVA No. | Initial Change | | Polymerization Conditions | | | | Saponification Conditions | | Structure of PVA | | | |
|---|---|---|---|---|---|---|---|---|---|---|---|---|---|
| | | Vinyl Acetate Monomer (parts) | Methanol (parts) | Pressure of CO during polymerization (MPa) | Polymerization Temperature (°C) | Polymerisation Time (hours) | Polymerization Conversion (%) | Concentration of PVAc (%) | Molar Ratio of NaOH [1] | Polymerization Degree | Amount of modification with CO (mol%) | Saponifcation Degree (mol%) | Value of Formula (I) |
| Production Example 1 | PVA 1 | 275 | 225 | 1.0 | 60 | 2.0 | 35 | 20 | 0.0195 | 860 | 0.9 | 70.2 | 7.7 |
| Production Example 2 | PVA 2 | 400 | 100 | 1.0 | 60 | 2.5 | 50 | 20 | 0.0180 | 1700 | 1.0 | 75.0 | 17.0 |
| Production Example 3 | PVA 3 | 500 | 0 | 1.0 | 60 | 2.5 | 50 | 20 | 0.0190 | 3620 | 1.0 | 72.1 | 36.2 |
| Production Example 4 | PVA 4 | 275 | 225 | 1.0 | 60 | 2.0 | 60 | 20 | 0.0195 | 400 | 0.9 | 72.0 | 3.6 |
| Production Example 5 | PVA 5 | 50 | 450 | 1.0 | 60 | 2.0 | 60 | 20 | 0.0200 | 100 | 0.9 | 70.1 | 0.9 |
| Production Example 6 | PVA 6 | 275 | 225 | 1.0 | 60 | 2.0 | 35 | 20 | 0.0225 | 860 | 0.9 | 87.2 | 7.7 |
| Production Example 7 | PVA 7 | 275 | 225 | 1.0 | 60 | 2.0 | 35 | 20 | 0.0240 | 860 | 0.9 | 89.6 | 7.7 |
| Production Example 8 | PVA 8 | 275 | 225 | 1.0 | 60 | 2.0 | 35 | 20 | 0.0255 | 860 | 0.9 | 92.1 | 7.7 |
| Production Example 9 | PVA 9 | 275 | 225 | 1.0 | 60 | 2.0 | 35 | 20 | 0.0185 | 860 | 0.9 | 66.2 | 7.7 |
| Production Example 10 | PVA 10 | 275 | 225 | 1.0 | 60 | 2.0 | 35 | 20 | 0.0180 | 860 | 0.9 | 63.1 | 7.7 |
| Production Example 11 | PVA 11 | 275 | 225 | 1.0 | 60 | 2.0 | 35 | 20 | 0.0170 | 860 | 0.9 | 58.2 | 7.7 |
| Production Example 12 | PVA 12 | 275 | 225 | 4.0 | 60 | 2.5 | 35 | 5 | 0.0280 | 810 | 3.5 | 71.0 | 28.4 |

EP 2 112 171 B1

(continued)

| Production Example No. | PVA No. | Initial Change | | Polymerization Conditions | | | | Saponification Conditions | | Structure of PVA | | | |
|---|---|---|---|---|---|---|---|---|---|---|---|---|---|
| | | Vinyl Acetate Monomer (parts) | Methanol (parts) | Pressure of CO during polymerization (MPa) | Polymerization Temperature (°C) | Polymerisation Time (hours) | Polymerization Conversion (%) | Concentration of PVAc (%) | Molar Ratio of NaOH [1] | Polymerization Degree | Amount of modification with CO (mol%) | Saponifcation Degree (mol%) | Value of Formula (I) |
| Production Example 13 | PVA 13 | 275 | 225 | 8.5 | 60 | 3.5 | 35 | 5 | 0.0340 | 680 | 7.5 | 72.3 | 51.0 |
| Production Example 14 | PVA 14 | 275 | 225 | 10.0 | 60 | 4.0 | 35 | 5 | 0.0400 | 600 | 9.3 | 70.5 | 55.8 |
| Production Example 15 | PVA 15 | 275 | 225 | 0.4 | 60 | 2.0 | 35 | 20 | 0.0100 | 880 | 0.3 | 71.0 | 2.6 |
| Production Example 16 | PVA 16 | 275 | 225 | 0.1 | 60 | 2.0 | 35 | 20 | 0.0070 | 920 | 0.04 | 70.3 | 0.4 |
| Production Example 17 | PVA 17 | 275 | 225 | 0.0 | 60 | 2.0 | 35 | 20 | 0.0050 | 1020 | 0 | 72.8 | 0.0 |
| Production Example 18 | PVA 18 | 1200 | 745 | 0.0 | 60 | 4.0 | 30 | 50 | 0.0030 | 800 | 0 | 72.0 | 0.0 |

1) Molar ratio of sodium hydroxide (NaOH) to vinyl acetate units in CO-modified PVAc
2) In all Production Examples, 0.25 parts by weight of 2,2'-azobisisobutyronitrile (AIBN) was used as a polymerization initiator.

EP 2 112 171 B1

(Example 1: Production of Vinyl Chloride Particles)

A glass-lining autoclave (with an internal volume of 5 liters) equipped with a reflux condenser was charged with 40 g of a water solution of PVA1 produced as described above (deionized water containing 0.018 g of PVA1 dissolved therein) and 0.04 g of a toluene solution of diisopropyl peroxydicarbonate (with a concentration of 70%). The autoclave was evacuated to remove oxygen until the pressure inside the autoclave was reduced to 0.0067 MPa. Then, 30 g of vinyl chloride monomer was charged therein, and the reaction solution was heated to 57°C, while being stirred, to carry out suspension polymerization (the weight ratio of PVA1 to the vinyl chloride monomer was 0.0006). At the start of the polymerization, the pressure inside the autoclave was 0.83 MPa. This pressure reached 0.44 MPa seven hours after the start of the polymerization, at which time the polymerization was stopped. The unreacted vinyl chloride monomer remaining in the autoclave was purged, and the contents of the autoclave was taken out and dehydrated to dryness. Thus, vinyl chloride polymer particles were obtained. The polymerization yield of the vinyl chloride polymer was 85%, and the average degree of polymerization thereof was 1050. The particle size distribution of the particles thus obtained and the amount of scale deposited on the polymerization vessel were evaluated. The results of the evaluation are shown in Table 2 below.

(Examples 2 to 11 and Comparative Examples 1 to 7)

Vinyl chloride polymer particles were obtained in the same manner as in Example 1 except that PVA2 to PVA18 were used as PVAs in place of PVA1. The particle size distributions of the particles thus obtained and the amounts of scale deposited on the polymerization vessels were evaluated. The results of the evaluation are shown in Table 2 below.

(Example 12)

Vinyl chloride polymer particles were obtained in the same manner as in Example 1 except that the amount of PVA1 used was changed to 0.015 g (the weight ratio of PVA1 to the vinyl chloride monomer was 0.0005). The particle size distribution of the particles thus obtained and the amount of scale deposited on the polymerization vessel were evaluated. The results of the evaluation are shown in Table 2 below.

(Example 13)

Vinyl chloride polymer particles were obtained in the same manner as in Example 1 except that the amount of PVA1 used was changed to 0.012 g (the weight ratio of PVA1 to the vinyl chloride monomer was 0.0004). The particle size distribution of the particles thus obtained and the amount of scale deposited on the polymerization vessel were evaluated. The results of the evaluation are shown in Table 2 below.

Table 2

| Production Example No. | PVA No. | 60 mesh on (wt.%) | 60 mesh pass 100 mesh on (wt.%) | 100 mesh pass 150 mesh on (wt.%) | 150 mesh pass 200 mesh on (wt.%) | 200 mesh pass (wt.%) | Scale Deposition |
|---|---|---|---|---|---|---|---|
| Example 1 | PVA1 | 0.3 | 16.9 | 49.9 | 27.5 | 5.4 | A |
| Example 2 | PVA2 | 0.2 | 22.4 | 52.2 | 21.2 | 4.0 | B |
| Example 3 | PVA4 | 0.7 | 17.0 | 50.0 | 27.0 | 5.3 | A |
| Example 4 | PVA6 | 0.6 | 23.0 | 54.0 | 19.0 | 3.4 | B |
| Example 5 | PVA9 | 0.8 | 24.9 | 57.5 | 15.0 | 1.8 | B |
| Example 6 | PVA7 | 1.4 | 27.7 | 57.0 | 13.0 | 0.9 | B |
| Example 7 | PVA10 | 1.1 | 26.2 | 55.3 | 15.0 | 2.4 | B |
| Example 8 | PVA12 | 0.1 | 6.5 | 55.5 | 29.6 | 8.3 | A |
| Example 9 | PVA15 | 0.5 | 19.0 | 52.4 | 25.9 | 2.2 | A |
| Example 10 | PVA13 | 1.2 | 25.6 | 55.6 | 17.5 | 0.1 | C |

(continued)

| Production Example No. | PVA No. | 60 mesh on (wt.%) | 60 mesh pass 100 mesh on (wt.%) | 100 mesh pass 150 mesh on (wt.%) | 150 mesh pass 200 mesh on (wt.%) | 200 mesh pass (wt.%) | Scale Deposition |
|---|---|---|---|---|---|---|---|
| Example 11 | PVA16 | 1.7 | 26.5 | 57.2 | 14.5 | 0.1 | C |
| Example 12 | PVA1 | 0.2 | 24.2 | 49.2 | 21.2 | 5.2 | A |
| Example 13 | PVA1 | 1.4 | 27.3 | 52.1 | 15.0 | 4.2 | A |
| Comparative Example 1 | PVA3 | 5.2 | 58.6 | 36.0 | 0.2 | 0.0 | D |
| Comparative Example 2 | PVA5 | 12.1 | 54.4 | 33.3 | 0.2 | 0.0 | D |
| Comparative Example 3 | PVA8 | 3.8 | 33.5 | 53.1 | 9.5 | 0.1 | D |
| Comparative Example 4 | PVA11 | 7.8 | 39.0 | 49.2 | 4.0 | 0.0 | D |
| Comparative Example 5 | PVA14 | 7.8 | 33.5 | 54.7 | 4.0 | 0.0 | D |
| Comparative Example 6 | PVA17 | 60.2 | 24.5 | 14.2 | 1.0 | 0.1 | D |
| Comparative Example 7 | PVA18 | 24.2 | 61.1 | 12.3 | 1.6 | 0.8 | D |

As is apparent from Tables 1 and 2, in each of Examples 1 to 13 using, as a dispersion stabilizer, a CO-modified PVA having an amount of modification with CO, a viscosity-average degree of polymerization, and a saponification degree, respectively, in the above-mentioned ranges of values, a vinyl chloride polymer containing almost no coarse particles and having a sharp particle size distribution could be produced, and the amount of scale deposited on the polymerization vessel also could be reduced, as compared with the following Comparative Examples: Comparative Examples 1 to 5 each using, as a dispersion stabilizer, a CO-modified PVA in which one selected from the amount of modification with CO, the viscosity-average degree of polymerization, and the saponification degree is out of the above-mentioned range of values; Comparative Example 6 using an unmodified PVA as a dispersion stabilizer; and Comparative Example 7 using, as a dispersion stabilizer, a conventional carbonyl group-containing PVA having enone structures on only the ends of its main chain. Particularly in each of Examples 1 to 9, 12, and 13 using, as a dispersion stabilizer, a CO-modified PVA satisfying the formula (I), the amount of scale deposited on the polymerization vessel could be reduced significantly.

Furthermore, as shown in Examples 12 and 13, it was found that even when an extremely small amount of the dispersion stabilizer of the present invention was used for the suspension polymerization of vinyl chloride, a vinyl chloride polymer containing almost no coarse particles and having a sharp particle size distribution could be produced, and in this case, almost no scale deposition on the polymerization vessel was observed.

**Industrial Applicability**

When the dispersion stabilizer of the present invention is used for suspension polymerization of a vinyl compound, a vinyl compound polymer containing fewer coarse particles formed and having a sharper particle size distribution than ever before can be produced, and the amount of scale deposited on the polymerization vessel can be reduced significantly. In addition, even if an extremely small amount of the dispersion stabilizer of the present invention is added, the above-mentioned advantageous effects can be achieved. Thus, its industrial value is extremely high.

**Claims**

1.   A dispersion stabilizer for suspension polymerization of a vinyl compound, the dispersion stabilizer being composed of a carbon monoxide-vinyl alcohol copolymer containing a constitutional unit derived from carbon monoxide (a CO unit) and a vinyl alcohol unit,

wherein the copolymer has a content of the CO unit of 0.01 to 8 mol%, a viscosity-average degree of polymerization of 200 to 3500, and a saponification degree of 60 to 90 mol%.

2. The dispersion stabilizer for suspension polymerization of a vinyl compound according to Claim 1, wherein in the copolymer, the viscosity-average degree of polymerization Pη and the content of the CO unit Y mol% satisfy a relationship represented by the following formula (I):

$$2 \leq 0.01 \times P\eta \times Y \leq 50 \ ...... \ (I)$$

3. The dispersion stabilizer for suspension polymerization of a vinyl compound according to Claim 1, wherein the copolymer has in its main chain an enone structure at a position other than ends of the main chain.

4. A method of producing a vinyl compound polymer, the method comprising carrying out suspension polymerization of a vinyl compound using a dispersion stabilizer,

wherein the dispersion stabilizer is a carbon monoxide-vinyl alcohol copolymer containing a constitutional unit derived from carbon monoxide (a CO unit) and a vinyl alcohol unit, and having a content of the CO unit of 0.01 to 8 mol%, a viscosity-average degree of polymerization of 200 to 3500, and a saponification degree of 60 to 90 mol%.

**Patentansprüche**

1. Dispersionsstabilisator zur Suspensionspolymerisation einer Vinylverbindung, wobei der Dispersionsstabilisator zusammengesetzt ist aus einem Kohlenmonoxid-Vinylalkohol-Copolymer, welches eine konstituierende Einheit enthält, die aus Kohlenmonoxid (einer CO-Einheit) und einer Vinylalkoholeinheit abgeleitet ist,

wobei das Copolymer einen Gehalt der CO-Einheit von 0,01 - 8 mol-%, einen durchschnittlichen viskosimetrischen Polymerisationsgrad von 200 bis 3500 und einen Verseifungsgrad von 60 - 90 mol-% aufweist.

2. Dispersionsstabilisator zur Suspensionspolymerisation einer Vinylverbindung nach Anspruch 1, wobei in dem Copolymer der durchschnittliche viskosimetrische Polymerisationsgrad Pη und der Gehalt der CO-Einheit, Y mol-%, eine Beziehung erfüllen, die durch die folgende Formel (I) dargestellt ist:

$$2 \leq 0{,}01 \times P\eta \times Y \leq 50 \ ...... \ (I)$$

3. Dispersionsstabilisator zur Suspensionspolymerisation einer Vinylverbindung nach Anspruch 1, wobei das Copolymer in seiner Hauptkette eine Enon-Struktur an einer Position hat, die von Enden der Hauptkette verschieden ist.

4. Verfahren zur Herstellung eines Vinylverbindungspolymers, wobei das Verfahren die Ausführung einer Suspensionspolymerisation von einer Vinylverbindung unter Verwendung eines Dispersionsstabilisators umfaßt,

wobei der Dispersionsstabilisator ein Kohlenmonoxid-Vinylalkohol-Copolymer ist, welches eine konstituierende Einheit enthält, die aus Kohlenmonoxid (einer CO-Einheit) und einer Vinylalkoholeinheit abgeleitet ist, und einen Gehalt der CO-Einheit von 0,01 - 8 mol-%, einen durchschnittlichen viskosimetrischen Polymerisationsgrad von 200 bis 3500 und einen Verseifungsgrad von 60 - 90 mol-% aufweist.

**Revendications**

1. Stabilisateur de dispersion pour une polymérisation en suspension d'un composé vinylique, le stabilisateur de dispersion étant constitué d'un copolymère de monoxyde de carbone-alcool vinylique contenant une unité de constitution dérivée du monoxyde de carbone (une unité CO) et une unité d'alcool vinylique,

dans lequel le copolymère présente une teneur en unité CO de 0,01 à 8 % en mole, un degré moyen de polymérisation mesuré par la viscosité de 200 à 3 500, et un degré de saponification de 60 à 90 % en mole.

**2.** Stabilisateur de dispersion pour une polymérisation en suspension d'un composé vinylique selon la revendication 1, dans lequel dans le copolymère, le degré moyen de polymérisation Pη mesuré par la viscosité et la teneur en unité CO Y % en mole satisfait une relation représentée par la formule (I) suivante :

$$2 \leq 0{,}01 \times P\eta \times Y \leq 50 \ \ldots\ldots \ (I)$$

**3.** Stabilisateur de dispersion pour une polymérisation en suspension d'un composé vinylique selon la revendication 1, dans lequel le copolymère présente dans sa chaîne principale une structure énone à une position différente des extrémités de la chaîne principale.

**4.** Procédé de production d'un polymère de composé vinylique, le procédé comprenant la réalisation d'une polymérisation en suspension d'un composé vinylique utilisant un stabilisateur de dispersion, dans lequel le stabilisateur de dispersion est un copolymère de monoxyle de carbone-alcool vinylique contenant une unité de constitution dérivée du monoxyde de carbone (une unité CO) et une unité d'alcool vinylique, et présentant une teneur en unité CO de 0,01 à 8 % en mole, un degré moyen de polymérisation mesuré par la viscosité de 200 à 3 500, et un degré de saponification de 60 à 90 % en mole.

EP 2 112 171 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5088251 B
- JP 5105702 A

- JP 8208724 A

**Non-patent literature cited in the description**

- POVAL. Kobunshi Kankokai, 1984, 369-373411-415